Europäisches Patentamt

European Patent Office

Office européen des brevets

(19)

(11) Publication number: **0 273 475 B1**

(12) # EUROPEAN PATENT SPECIFICATION

(45) Date of publication of patent specification: **04.03.92**  (51) Int. Cl.⁵: **A23L 1/176**, A23P 1/04, //A23L1/325

(21) Application number: **87202247.0**

(22) Date of filing: **18.11.87**

(54) **Food product.**

(30) Priority: **27.11.86 GB 8628440**
**21.01.87 NL 8700134**

(43) Date of publication of application:
**06.07.88 Bulletin 88/27**

(45) Publication of the grant of the patent:
**04.03.92 Bulletin 92/10**

(84) Designated Contracting States:
**AT BE CH DE ES FR GB GR IT LI NL SE**

(56) References cited:
**EP-A- 0 109 226**
**FR-A- 2 458 227**
**GB-A- 2 185 874**
**US-A- 3 723 137**
**US-A- 4 568 550**

(73) Proprietor: **UNILEVER NV**
**Burgemeester s'Jacobplein 1 P.O. Box 760**
**NL-3000 DK Rotterdam(NL)**

(84) Designated Contracting States:
**BE CH DE ES FR GR IT LI NL SE AT**

(73) Proprietor: **UNILEVER PLC**
**Unilever House Blackfriars P.O. Box 68**
**London EC4P 4BO(GB)**

(84) Designated Contracting States:
**GB**

(72) Inventor: **Barnes, Douglas James**
**9 Stevens Court**
**Eaton Ford Huntingdon TE19 3LF(GB)**
Inventor: **Yoell, Richard William Fletcher**
**2 Park Cottage Village Road**
**Bedford MK43 8HX(GB)**
Inventor: **Clark, Elsie Mary**
**98 Harborough Road**
**Rushden Northants. NN1 00LP(GB)**

(74) Representative: **Keppels, Willem Richard Engelbertus Gerardus, Drs. et al**
**Unilever N.V. Patent Division P.O.Box 137**
**NL-3130 AC Vlaardingen(NL)**

Rank Xerox (UK) Business Services

## Description

The invention relates to an easy method for preparing a coated food product and also to a dry particulate and to a coated food product.

The invention relates in particular to a process for preparing a coated food product wherein a piece of food having a wet surface is coated with a dry particulate comprising a bread-crumb material and an expanded, partially gelatinized starchy product which contains absorbed fat and/or oil.

In EP-A-109,226 a similar method is disclosed in which the coating material also comprises particles of a deep fat-fried, farinaceous material, e.g. crumb material. This material may be obtained by extruding leavened dough into hot oil for frying.

There is a continued need for coated food products such as coated meat, poultry, vegetables, cheese and fish which are suitable for oven-baking, grilling and frying without a previous pre-fry, or which can be microwave-heated after pre-frying.

The method of invention is distinguished over the method as initially described in that the piece of food is simultaneously or subsequently coated with a dry, fine, expanded, at least partially gelatinized starchy product having, prior to admixture with fat and/or oil, a bulk density not exceeding 250 g/l and voids up to 300 $\mu$m (microns), which contains 1-7 times its own weight of oil and/or fat.

The bread-crumb material can be any conventional crumb material normally employed in forming bread-type coatings. Suitable bread-crumb materials are, for instance, Japanese bread crumbs, cornflake crumbs and conventionally baked bread crumbs or bread crumbs prepared by mixing crumbs with fat or oil, such as for instance described in GB 2 185 874 - A (RHM). It is preferred to use a bread-crumb material having an average particle size in the range from 0.5 to 3.0 mm.

In order to obtain a coated food product which, after having been fried, baked or grilled, has an extra crisp crust having a pleasant, smooth appearance, it is preferred that a bread-crumb material be used having in the aforementioned range an average particle size between 1.2 and 1.8 mm, less that 5 wt.% of the bread-crumb material having a particle size less than 0.7 mm and less than 5 wt.% of the bread-crumb material having a particle size of more than 2.4 mm.

The expanded starchy product can be applied simultaneously with or subsequent to the coating of the food product with the bread-crumb material. Most convenient is the simultaneous application of the expanded starchy product and the bread-crumb material, for instance by using a dry mixture comprising both components. The weight ratio of bread-crumb material to the expanded, fat- and/or oil-containing starchy material is preferably between 5:1 and 0.5:1.

A lower level of starchy product can be used to give a non-pre-fried coating which imparts ovenability if, after breading, oil or hot fat is sprayed onto the surface of the coated product.

The food product can be pre-fried after coating, to give a product which is suitable for microwave heating.

The expanded starchy material can be obtained by several well-known expansion techniques such as puffing and drum-drying. A particularly useful process for preparing the expanded starchy material involves the extrusion of starch at a high pressure and elevated temperature. A preferred process for preparing such an extruded expanded starch product is described in German patent application N° 3 206 751. This preference is because of absorption capacity and taste.

Suitable starch materials to be expanded are, for instance, wheat flour, corn flour, tapioca, rice flour, corn starch, rice starch and potato starch. Preferably the starch product is mainly wheat starch or rice starch. The average particle size of the expanded starchy product is preferably less than the particle size of the coarsest bread-crumb material; moreover, it is preferred to use an expanded starchy product having an average particle size between 0.1 and 1.0 mm.

The fat and/or oil included in the starchy material can be any edible fat and/or oil or mixture thereof. The starchy material containing fat and/or oil can be obtained by simple admixture of the expanded starchy product with the fat. When fats having a high melting point are used it is advantageous to melt these prior to mixing. This melting is not necessary when fats having a low melting point are used.

The amount of fat and/or oil which is included in the expanded starchy product is preferably such that it is less than the maximum absorption capacity of the starchy product. Depending on the bulk density of the starchy product, the possible weight ratio of starchy material to fat can vary in a broad range. For starchy products which, prior to admixture with the fat, have a bulk density of less than 250 g/litre and voids up to 300 $\mu$m (microns), this ratio is preferably between 1:1 and 1:7.

For adhesion of the dry particulate, the surface of the piece of food is preferred to be wet. Wetting can, for instance, be achieved with water, a liquid batter or a similar wetting material.

When a frozen piece of food is used, wetting can also be achieved by deglazing, for instance by using steam, IR-radiation, hot air or other alternative methods of surface-heating.

Another possibility for improving adherence of the dry particulate involves the dusting of the surface of the food product prior to coating. Any suitable dusting material which will absorb and/or adhere a wetting material and/or the bread-crumb material can be used. Suitable dusting materials are, for instance, spray-dried fat powder, several protein-based materials such as gluten, skimmed milk powder, egg albumen, etc., native, modified or pre-gelled starches and other materials such as rusk and fibres.

The coating material may be admixed with other additives such as flavour, salt, stabilizers and other usual additives for food coatings.

It is also possible to admix the coating material with other powder materials such as, for instance, milk powder, sugar, maltodextrins, cellulose or hemi-cellulose. These powdered additives are believed to have barrier properties which enhance the microwaveability of the product.

The coating treatment can be repeated with the same or different compositions of the dry coating material. For adhesion, the surface of the coated food product is, prior to every coating treatment, preferably to be wetted with water, a liquid batter or similar wetting materials.

The invention will be exemplified in the following examples of preparing the coating material and of a method for coating this material on pieces of food.

Example 1

An initial batter mix containing the following ingredients was prepared:

| Component | % by weight |
|---|---|
| wheat flour | 19.40 |
| heat-treated wheat flour | 9.80 |
| potato starch | 9.80 |
| seasoning | 3.90 |
| leavening agents | 1.00 |
| skimmed milk powder | 0.50 |
| water | 55.60 |
| | 100 |

The batter mix is prepared by mixing the ingredients in a Planetary action blended for 120 sec. at 61 rpm and 240 sec. at 125 rpm.

Frozen fish pieces having an average size of 6 x 12 x 1 cm and a weight of 60 g were each coated with 20 g of the batter. A dry mix containing the following ingredients was prepared:

| Component | % by weight |
|---|---|
| Conventionally baked bread-crumbs (particle size 1.6-2.8 mm and a moisture content of 10-14% | 30.75 |
| PUFA shortening (sunflower oil) | 38.90 |
| Extruded wheat starch (bulk density 90 g/litre and an average particle size of 0.3 mm) | 9.45 |
| Conventionally baked bread-crumbs (particle size from 0.7-1.4 mm and a moisture content of 10-14%) | 20.90 |
| | 100 |

The starch and shortening were mixed in a Planetary action mixer for 120 sec. at 61 rpm, crumb with a particle size of 1.6 to 2.8 mm was added and mixed for 60 sec. at 61 rpm. Finally, crumb with a particle size of 0.7-1.4 mm was added and mixed for 60 sec. at 61 rpm.

The battered fish pieces were each coated with 20 g of the dry mix. The coated fish pieces were blast-frozen at -30°C for 40-60 minutes and then stored at -18°C.

The fish pieces were prepared for consumption by baking for 30 minutes in a conventional oven at 230°C. The resulting product was succulent inside and crisp but not dry on the outside.

Example 2

A dusting material comprising the following ingredients was prepared: fat powder containing spray-dried fat globules having an average particle size of 0.75 micron of hardened coconut oil containing glycerol lactopalmitate on a caseinate carrier.

Deglazed fish pieces having a size of 6 x 12 x 1 cm were each dusted with 2 g of the fat powder, and 20 g of the batter system of Example 1 was applied. A further mixe was made of the following ingredients according to the method as described in Example 1:

| Component | % by weight |
|---|---|
| Conventionally baked bread-crumb (particle size 1.8-2.8 mm) | 41.10 |
| PUFA shortening (sunflower oil) | 27.26 |
| Extruded wheat starch (bulk density 90 g/litre; particle size 0.25-0.35 mm) | 6.75 |
| Conventionally baked bread-crumb (particle size 0.7-1.5 mm) | 24.89 |
|  | 100 |

20 g of this mix was applied to the battered product.

The assembled product was blast-frozen at -30°C for 40-60 minutes and then stored at -18°C.

The fish pieces were prepared for consumption by baking in a conventional oven for 20 minutes at 210°C.

The resulting baked fish pieces were succulent on the inside and crisp but not dry on the outside.

Example 3

Pieces of fish were deglazed and dusted as described in Example 2, and 20 g of the batter system of Example 1 was applied. A breading material was made of the following ingredients:

| Component | % by weight |
|---|---|
| Conventionally baked bread-crumb (particle size 2.4-2.8 mm) | 40.5 |
| Sunflower oil | 27.0 |
| Extruded wheat starch (bulk density 80 g/litre; particle size 0.2-0.3 mm) | 8.0 |
| Conventionally baked bread-crumb (particle size 0.7-1.7 mm) | 24.5 |
|  | 100 |

The method of production was as described in Example 1. 20 gram of this breading material was applied to the battered product.

The assembled product was pre-fried for 90 seconds at 180°C and subsequently blast-frozen at -30°C for 45 minutes and then stored at -18°C.

The fish pieces were prepared for consumption by microwave-heating for 3 minutes at 650 Watt power, and after 90 seconds the products were turned.

The resulting baked fish pieces were succulent on the inside and crisp but not dry on the outside.

**Claims**

1. A process for preparing a coated food product, wherein a piece of food having a wet surface is coated with a dry particulate comprising a bread-crumb material and an expanded, at least partially gelatinized starchy product which contains absorbed fat and/or oil, characterized in that the piece of food is simultaneously or subsequently coated with a dry, fine, expanded, at least partially gelatinized starchy product having, prior to admixture with fat and/or oil, a bulk density not exceeding 250 g/l and voids up to 300 $\mu$m (microns), which contains 1-7 times its own weight of oil and/or fat.

2. A process according to Claim 1, characterized by coating the piece of food with a dry mixture comprising the bread-crumb material and the expanded fat- and/or oil-containing starchy product having, prior to admixture with fat and/or oil, a bulk density not exceeding 250 g/l.

3. A process according to Claim 2, characterized in that the dry mixture comprises the bread-crumb material and the expanded fat- and/or oil-containing starchy product having, prior to admixture with fat and/or oil, a bulk density not exceeding 250 g/l and in a weight ratio between 5:1 and 0.5:1.

4. A process according to one or more of the preceding Claims, characterized by using an expanded starchy product having, prior to admixture with fat and/or oil, a bulk density not exceeding 250 g/l and having an average particle size in the range from 0.1 to 1 mm.

5. Dry particulate comprising an expanded, at least partially gelatinized starchy product which contains absorbed fat and/or oil, characterized by an expanded starchy product having, prior to admixture with fat and/or oil, a bulk density not exceeding 250 g/l and voids up to 300 $\mu$m (microns), which contains 1-7 times its own weight of oil and/or fat.

6. Dry particulate according to Claim 5, characterized in that the particulate also comprises a bread-crumb material.

7. Dry particulate according to Claim 6, characterized in that the bread-crumb material has an average particle size in the range from 0.5 to 3.0 mm.

8. A food product, coated with a dry particulate comprising a bread-crumb material and an expanded, at least partially gelatinized starchy product which contains absorbed fat, characterized in that the coating also comprises an expanded, at least partially gelatinized, starchy product having, prior to admixture with fat and/or oil, a bulk density not exceeding 250 g/l and voids up to 300 $\mu$m (microns), which contains 1-7 times its own weight of oil and/or fat.

9. A food product according to Claim 8, characterized in that the expanded starchy product having, prior to admixture with fat and/or oil, a bulk density not exceeding 250 g/l, is an extruded starchy product.

**Revendications**

1. Un procédé pour préparer un produit alimentaire enrobé dans lequel un morceau d'aliment ayant une surface humide est enrobé avec un élément particulaire sec comprenant un matériau de miette de pain et un produit d'amidon expansé partiellement gélatinisé qui contient de la matière grasse et/ou de l'huile absorbée, caractérisé en ce que le morceau d'aliment est simultanément ou subséquemment enrobé avec un produit d'amidon expansé sec, fin, au moins partiellement gélatinisé dont la densité de masse n'excède pas 250 g/l avant d'être mélangé avec de la matière grasse et/ou de l'huile, ayant des vides allant jusqu'à 300 $\mu$m (microns), et contenant de 1 à 7 fois sa propre masse d'huile et/ou de matière grasse.

2. Un procédé selon la Revendication 1, caractérisé en ce que le morceau d'aliment est enrobé avec un mélange comprenant le matériau de miette de pain et le produit d'amidon expansé contenant de la matière grasse et/ou de l'huile, la densité de masse n'excédant pas 250 g/l.

3. Un procédé selon la Revendication 2, caractérisé en ce que le mélange sec comprend le matériau de miette de pain et le matériau d'amidon expansé contenant de la matière grasse et/ou de l'huile ayant, avant d'être mélangé à la matière grasse et/ou l'huile, une densité de masse ne dépassant pas 250 g/l et un rapport en masse compris entre 5/1 et 0,5/1.

4. Un procédé selon l'une ou plusieurs des Revendications précédentes, caractérisé par l'utilisation d'un produit d'amidon expansé ayant, avant d'être mélangé avec de la matière grasse et/ou de l'huile, une densité de masse ne dépassant pas 250 g/l et ayant une taille de particules comprise dans la gamme allant de 0,1 à 1 mm.

5. Un élément particulaire sec comprenant un produit d'amidon expansé au moins partiellement gélatinisé contenant de la matière grasse et/ou de l'huile, caractérisé par un produit d'amidon expansé dont la densité de masse n'excède pas 250 g/l avant d'être mélangé avec de la matière grasse et/ou de l'huile, ayant des vides allant jusqu'à 300 $\mu$m (microns) et contenant de 1 à 7 fois sa propre masse d'huile et/ou de matière grasse.

6. Un élément particulaire sec selon la revendication 5, caractérisé en ce que l'élément particulaire comprend également un matériau de miette de pain.

7. Un élément particulaire sec selon la revendication 6, caractérisé en ce que le matériau de miette de pain a une taille moyenne de particules comprise dans la gamme allant de 0,5 à 3,0 mm.

8. Un produit alimentaire enrobé avec un élément particulaire sec comprenant un matériau de miette de pain et un produit d'amidon expansé, au moins partiellement gélatinisé qui contient de la matière grasse absorbée, caractérisé en ce que l'enrobage comprend également un produit d'amidon expansé au moins partiellement gélatinisé dont la densité de masse n'excède pas 250 g/l avant le mélange avec de la matière grasse et/ou de l'huile, ayant des vides allant jusqu'à 300 $\mu$m (microns), et contenant de 1 à 7 fois sa propre masse d'huile et/ou de matière grasse.

9. Un produit alimentaire selon la Revendication 8, caractérisé en ce que le produit d'amidon expansé ayant une densité de masse n'excédant pas 250 g/l avant d'être mélangé avec de la matière grasse et/ou de l'huile, est un produit d'amidon extrudé.

**Patentansprüche**

1. Verfahren zur Herstellung eines beschichteten Lebensmittelproduktes, worin ein Lebensmittelstück mit feuchter Oberfläche mit einem trockenen teilchenförmigen Stoff, umfassend ein Brotkrümelmaterial und ein geschäumtes, wenigstens teilweise gelatinisiertes Stärkeprodukt, das adsorbiertes Fett und/oder Öl enthält, beschichtet wird, dadurch gekennzeichnet, daß das Lebensmittelstück gleichzeitig oder anschließend mit einem trockenen, feinen, geschäumten und wenigstens teilweise gelatinisierten Stärkeprodukt beschichtet wird, welches vor dem Mischen mit Fett und/oder Öl eine Schüttdichte von nicht mehr als 250 g/l und Hohlräume bis zu 300 $\mu$m (Mikrons) aufweist und das 1- bis 7-fache seines Eigengewichts an Öl und/oder Fett enthält.

2. Verfahren nach Anspruch 1, gekennzeichnet durch Beschichten des Lebensmittelstückes mit einer trockenen Mischung umfassend das Brotkrümelmaterial und das geschäumte Fett und/oder Öl enthaltende Stärkeprodukt, welches vor dem Mischen mit Fett und/oder Öl eine Schüttdichte von nicht mehr als 250 g/l aufweist.

3. Verfahren nach Anspruch 2, dadurch gekennzeichnet, daß die trockene Mischung das Brotkrümelmaterial und das geschäumte Fett und/oder Öl enthaltende Stärkeprodukt umfaßt, welches vor dem Mischen mit Fett und/oder Öl eine Schüttdichte von nicht mehr als 250 g/l aufweist, in einem Gewichtsverhältnis zwischen 5:1 und 0,5:1.

4. Verfahren nach einem oder mehreren der vorhergehenden Ansprüche, gekennzeichnet durch die Verwendung eines geschäumten Stärkeproduktes, das vor dem Mischen mit Fett und/oder Öl eine Schüttdichte von nicht mehr als 250 g/l und eine durchschnittliche Teilchengröße im Bereich von 0,1 bis 1 mm aufweist.

5. Trockener teilchenförmiger Stoff umfassend ein geschäumtes, wenigstens teilweise gelatinisiertes Stärkeprodukt, welches adsorbiertes Fett und/oder Öl enthält, gekennzeichnet durch ein geschäumtes Stärkeprodukt, das vor dem Mischen mit Fett und/oder Öl eine Schüttdichte von nicht mehr als 250 g/l und Hohlräume bis zu 300 $\mu$m (Mikrons) aufweist und das 1- bis 7-fache seines Eigengewichts an Öl und/oder Fett enthält.

6. Trockener teilchenförmiger Stoff nach Anspruch 5, dadurch gekennzeichnet, daß der teilchenförmige Stoff auch ein Brotkrümelmaterial umfaßt.

7. Trockener teilchenförmiger Stoff nach Anspruch 6, dadurch gekennzeichnet, daß das Brotkrümelmaterial eine durchschnittliche Teilchengröße im Bereich von 0,5 bis 3,0 mm aufweist.

8. Lebensmittelprodukt, beschichtet mit einem trockenen teilchenförmigen Stoff umfassend ein Brotkrümelmaterial und ein geschäumtes, wenigstens teilweise gelatinisiertes Stärkeprodukt, welches adsorbiertes Fett enthält, dadurch gekennzeichnet, daß die Beschichtung auch ein geschäumtes, wenigstens teilweise gelatinisiertes Stärkeprodukt umfaßt, das vor dem Mischen mit Fett und/oder Öl eine

6

Schüttdichte von nicht mehr als 250 g/l und Hohlräume bis zu 300 μm (Mikrons) aufweist und das 1- bis 7-fache seines Eigengewichts an Öl und/oder Fett enthält.

9. Lebensmittelprodukt nach Anspruch 8, dadurch gekennzeichnet, daß das geschäumte Stärkeprodukt, das vor dem Mischen mit Fett und/oder Öl eine Schüttdichte von nicht mehr als 250 g/l aufweist, ein extrudiertes Stärkeprodukt ist.